# EUROPÄISCHE PATENTSCHRIFT

(11) **EP 1 802 638 B1**
(45) Veröffentlichungstag und Bekanntmachung des Hinweises auf die Patenterteilung: **20.07.2011**
(21) Anmeldenummer: 05788793.7
(22) Anmeldetag: 04.10.2005
(51) Int. Cl.: C07F 5/06

(54) **BORHALTIGE SALZE, DEREN HERSTELLUNG UND VERWENDUNG**
BORON-CONTAINING SALTS, THE PRODUCTION THEREOF AND THEIR USE
NOUVEAUX SELS CONTENANT DU BORE, LEUR PRODUCTION ET LEUR UTILISATION

(30) Priorität: 21.10.2004 DE 102004051278
(43) Veröffentlichungstag der Anmeldung: 04.07.2007
(73) Patentinhaber: Merck Patent GmbH, 64293 Darmstadt (DE)
(72) Erfinder: FINZE, Maik, 31582 Nienburg (DE); BERNHARDT, Eduard, 42107 Wuppertal (DE); WILLNER, Helge, 45481 Muelheim/Ruhr (DE); IGNATYEV, Nikolai (Mykola), 47058 Duisburg (DE); WELZ-BIERMANN, Urs, 64646 Heppenheim (DE)
(86) Internationale Anmeldenummer: PCT/EP2005/010662
(87) Internationale Veröffentlichungsnummer: WO 2006/045405

(56) Entgegenhaltungen:
- WO-A-2004/072089
- FINZE, MAIK ET AL: "[(CF3)3BCP]- and [(CF3)3BCAs]-: Thermally stable phosphaethynyl and arsaethynyl complexes" ANGEWANDTE CHEMIE, INTERNATIONAL EDITION , 43(32), 4160-4163 CODEN: ACIEF5; ISSN: 1433-7851, 13. August 2004 (2004-08-13), XP002356482 -& DATABASE CA [Online] CHEMICAL ABSTRACTS SERVICE, COLUMBUS, OHIO, US; FINZE, MAIK ET AL: "[(CF3)3BCP]- and [(CF3)3BCAs]-: Thermally stable phosphaethynyl and arsaethynyl complexes" XP002356497 gefunden im STN Database accession no. 2004:719040
- BERNHARDT E ET AL: "EINE EFFIZIENTE SYNTHESE VON TETRACYANOBORATEN DURCH SINTERPROZESSE AN EFFICIENT SYNTHESIS FOR TETRACYANOBORATES BY SINTER PROCESSES" ZEITSCHRIFT FUER ANORGANISCHE UND ALLGEMEINE CHEMIE, VERLAG VON LEOPOLD VOSS, LEIPZIG, DE, Bd. 629, Nr. 7/8, 2003, Seiten 1229-1234, XP009030008 ISSN: 0044-2313
- DATABASE CA [Online] CHEMICAL ABSTRACTS SERVICE, COLUMBUS, OHIO, US; JIAO, HAIJUN ET AL: "Large Effects of Medium on Geometries. An ab Initio Study" XP002356498 gefunden im STN Database accession no. 1994:638742 & JOURNAL OF THE AMERICAN CHEMICAL SOCIETY , 116(16), 7429-30 CODEN: JACSAT; ISSN: 0002-7863, 1994,
- HAMILTON B. H. ET AL.: "The structures of Cu(I) and Ag(I) coordination polymers using the tricyanofluoroborate anion" CHEM. COMM., 2002, Seiten 842-843, XP002356579

## Beschreibung

Borhaltige Salze, deren Herstellung und Verwendung Die Erfindung betrifft

Salze der allgemeinen Formel (II)

[B(R^{F})_{4-x-y}(CN)ₓF_{y}]ₐ⁻ M^{a+} (II)

wobei
x = 1, 2 oder 3,
y = 0 oder 1,
x+y = 1, 2 oder 3,
a = 1 oder 2 ist,
und worin
die Liganden R^{F} gleich oder verschieden sein können und R^{F} für eine perfluorierte oder teilfluorierte C₁₋₁₂-Alkyl-Gruppe steht und wobei die CN-Gruppe sowohl über das C-Atom an das B-Atom gebunden vorliegt und
M^{a+} ein organisches Kation ist, welches ausgewählt wird aus der Gruppe
[NR¹R²R³R⁴]⁺, [PR¹R²R³R⁴]⁺_{,} (P(NR¹R²)₂(NR³R⁴)₂]⁺, [C(NR¹R²)(NR³R⁴)(NR⁵R⁶)]⁺, [(R¹R²N)-C(=OR⁷)(NR³R⁴)]⁺ oder [(R¹R²N)-C(=SR⁷)(NR³R⁴)]⁺, worin
R¹ bis R⁷ jeweils unabhängig voneinander
Wasserstoff,
geradkettiges oder verzweigtes Alkyl mit 1 bis 20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere der Substituenten R¹ bis R⁷ teilweise oder vollständig mit Halogenen, insbesondere -F und/oder -Cl, oder teilweise mit -CN oder -NO₂, substituiert sein können
und wobei ein oder zwei nicht benachbarte und nicht α-ständige Kohlenstoffatome der Substituenten R¹ bis R⁶ durch Atome und/oder Atomgruppierungen ausgewählt aus der Gruppe -O-, -C(O)-, -C(O)O-, - S-, -S(O)-, -SO₂-, -SO₂O-, -C(O)NH-, -C(O)NR'-, -SO₂NH-, -SO₂NR'-, - N=, -N=N-, -NH-, -NR'-, -PR'-, -P(O)R'-, -P(O)R'-O-, -O-P(O)R'-O-, -P(O)(NR'₂)-NR'- und -PR'₂=N- oder mit den Endgruppen -C(O)X' oder - SO₂X', mit R' = nicht, teilweise oder perfluoriertes C₁- bis C₆-Alkyl, C₃-bis C₇-Cycloalkyl, unsubstituiertes oder substituiertes Phenyl oder unsubstituierter oder substituierter Heterocyclus und X' = F, Cl oder Br, ersetzt sein können,
ausgenommen [NH₄][B(CF₃)₃CN]
oder das organische Kation ein heterocyclisches Kation ist, welches ausgewählt wird aus der Gruppe 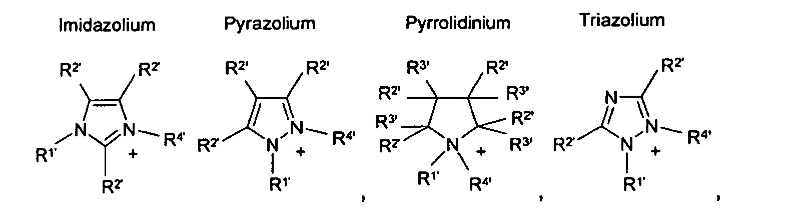 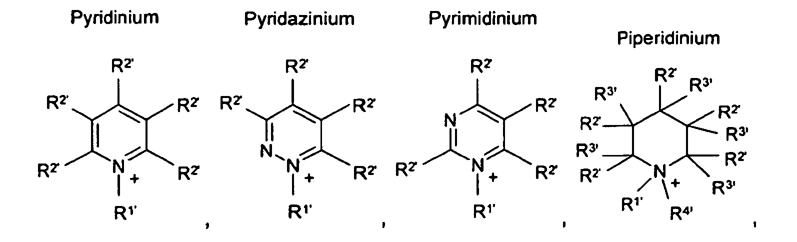 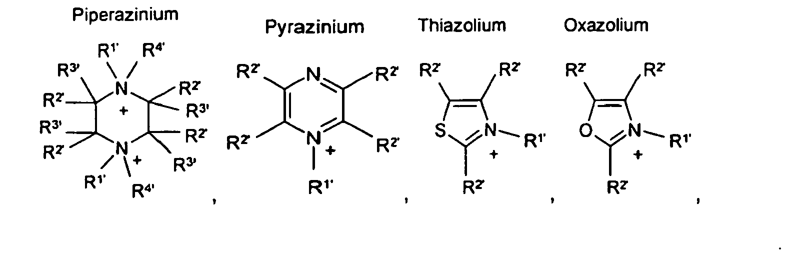 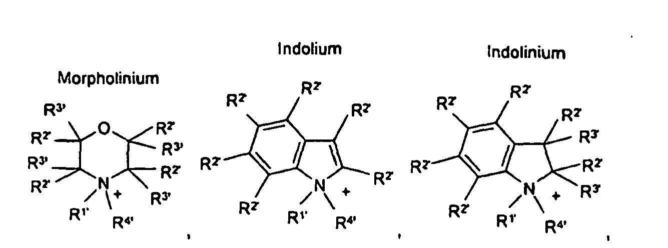 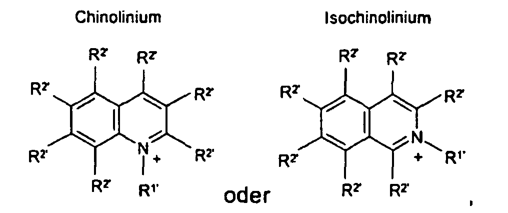 wobei die Substituenten
R¹' bis R⁴' jeweils unabhängig voneinander
Wasserstoff,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann,
gesättigtes, teilweise oder vollständig ungesättigtes Heteroaryl, Heteroaryl-C₁-C₆-alkyl oder Aryl-C₁-C₆-alkyl bedeutet,
wobei ein oder mehrere Substituenten R¹' bis R⁴' teilweise oder vollständig mit Halogenen, insbesondere -F und/oder -Cl, oder teilweise mit -CN oder -NO₂, substituiert sein können, wobei R¹' und R⁴' nicht gleichzeitig perfluoriert oder perchloriert sein können
und wobei ein oder zwei nicht benachbarte und nicht in α-Position zum Heteroatom stehende Kohlenstoffatome der Substituenten R¹' bis R⁴', durch Atome und/oder Atomgruppierungen ausgewählt aus der Gruppe - O-, -C(O)-, -C(O)O-, -S-, -S(O)-, -SO₂-, -SO₂O-, -C(O)NH-, -C(O)NR'-, - SO₂NH-, -SO₂NR'-, -N=, -N=N-, -NH-, -NR'-, -PR'-, -P(O)R'-, -P(O)R'-O-, -O-P(O)R'-O-, -P(O)(NR'₂)-NR'- und -PR'₂=N- oder mit den Endgruppen - C(O)X' oder -SO₂X', mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus und X' = F, Cl oder Br, ersetzt sein können.

Ferner betrifft die vorliegende Erfindung Verfahren zur Herstellung der erfindungsgemäßen, Salze.

Des weiteren betrifft die Erfindung die Verwendung der erfindungsgemäßen Salze.

Im Stand der Technik sind Borat-Anionen beschrieben, bei denen Fluor-Liganden durch Cyanid (E. Bernhardt, G. Henkel, H. Willner, Z. Anorg. Allg. Chem. 626 (2000) 560; D. Williams, B. Pleune, J. Kouvetakis, M. D. Williams, R. A. Andersen, J. Amer. Chem. Soc. 122 (2000) 7735; E. Bernhardt, M. Berkei, M. Schürmann, H. Willner, Z. Anorg. Allg. Chem. 628 (2002) 1734) und Trifluormethyl-Liganden (E. Bernhardt, G. Henkel, H. Willner, G. Pawelke, H. Bürger, Chem. Eur. J. 7 (2001) 4696; G. Pawelke, H. Bürger, Coord. Chem. Rev. 215 (2001) 243) ausgetauscht sind. Dabei werden die Trifluormethyl-Borate ausgehend von den Cyanoboraten synthetisiert, wobei allerdings die Cyanoborate schwer und nur in geringen Mengen zugänglich sind. Die Synthese von [B(CN)₄]⁻ ist arbeitsintensiv und nur in kleinem präparativem Maßstab durchführbar. Darüber hinaus sind die Ausgangsmaterialien teuer. Salze mit Tetrakis(trifluormethyl)borat-Anionen werden in EP 1205480 A1 beschrieben. Eine neue Synthese von Alkalimetalltetracyanoboraten und Salze, insbesondere ionische Flüssigkeiten, mit einem Cyanoborat-Anion, das auch F-Liganden enthält, werden in WO 2004/07089 beschrieben.

Der vorliegenden Erfindung lag die Aufgabe zugrunde, Salze zur Verfügung zu stellen, die zu ionischen Flüssigkeiten oder Katalysatorsystemen führen.

Gelöst wird diese Aufgabe durch die salze der allgemeinen Formel (II).

Die Synthese der Borsäuren der Formel I

[B(R^{F})_{4-x-y}(CN)ₓF_{y}]⁻ H⁺ (I),

mit
x = 0, 1, 2, 3 oder 4 und
y = 0, 1, 2 oder 3 und
x+y≤4
und worin
die Liganden R^{F} gleich oder verschieden sein können und R^{F} für eine perfluorierte oder teilfluorierte C₁₋₁₂-Alkyl-Gruppe steht, sowie deren Komplexe mit einem Lösemittel,
erfolgt durch Umsetzung von Alkalimetallsalzen der Formel (II-1)

[B(R^{F})_{4-x-y}(CN)ₓF_{y}]ₐ⁻ M^{a+} (II-1)

wobei
x = 0, 1, 2, 3 oder 4,
y = 0, 1, 2, oder 3 und
x+y≤4,
a = 1 ist,
und worin
R^{F} gleich oder verschieden sein können und
R^{F} für eine die Liganden perfluorierte oder teilfluorierte C₁₋₁₂-Alkyl-Gruppe steht und
M^{a+} ein Alkalimetallkation ist, mit
einer Säure, wobei gegebenenfalls zuvor eine Umwandlung zum Trialkylsilylether stattfinden kann, insbesondere bei späterer Umsetzung mit wasserfreier HF.

Allgemein entstehen die Säuren der Formel (I) aus der Umsetzung der korrespondierenden Metallsalze, insbesondere Alkalimetallsalze, mit starken Säuren, beispielsweise Chlorwasserstoffsäure.

Die Metallsalze der Säuren der Formel (I) können beispielsweise durch die folgende Zweistufen-Reaktion erhalten werden:
Kaliumtetrafluoroborat kann mit NaCN in Gegenwart von KCI zu den Salzen Kaliumtetracyanoborat als Hauptprodukt umgesetzt werden, wie in WO 2004/07089 beschrieben, wobei jedoch auch die Salze K[B(CN)₃F], K[B(CN)₂F₂] und K[B(CN)F₃] in unterschiedlichen Mengenverhältnissen enstehen. Durch den stufenweisen Austausch des Fluor-Liganden durch den CN-Liganden ist eine Steuerung des Ligandenaustausches und der Mengenverhältnisse der entstehenden Salze über die Reaktionszeit möglich und bereitet dem Fachmann keinerlei Schwierigkeiten. Die anschließende Reaktion mit ClF₃, ClF oder (CH₃)₂NF, wie in J. Am. Chem. Soc. 2002, 124, 15385-15398 beschrieben, führt beispielsweise zu den Salzen K[B(CF₃)₄], K[B(CF₃)₃CN], K[B(CF₃)₃F], K[B(CF₃)₂CNF] oder K[B(CF₃)CNF_{2]} in unterschiedlichen Mengenverhältnissen. Das Mengenverhältnis der Reaktionsprodukte kann durch die Reaktionsführung gesteuert werden.

Die Säuren der Formel (I), die mindestens eine CN-Gruppe enthalten, können als lösemittelfreie Säuren isoliert werden. Die Säuren der Formel (I), in denen x = 0 ist, benötigen das Lösemittel um das Proton zu solvatisieren und so die Struktur zu stabilisieren.

Die Säuren weisen eine hohe Protonenaktivität auf, wie beispielsweise ersichtlich durch einen Deuterium-Austausch in C₆D₆.

Die Säuren können zur Synthese weiterer anorganischer oder organischer Salze verwendet werden, die wiederum als Leitsalze für verschiedene elektrochemische Vorrichtungen benutzt oder als ionische Flüssigkeiten verwendet werden können. Die Umwandlung in ihre Salze erfolgt beispielsweise durch Neutralisation mit einer anorganischen oder organischen Base, beispielsweise die Umsetzung von Tetracyanoborsäure mit Tetra(butyl)ammoniumhydroxid zu Tetra(butyl)ammonium tetracyanoborat.

Erfindungsgemäß ist eine Gruppe der Salze der Formel (II) bevorzugt, bei denen y = 0 ist.

Erfindungsgemäß ist eine Gruppe von Verbindungen der Formel (II) bevorzugt, in denen das Kation M^{a+} ein organisches Kation ist.

Das organische Kation kann dabei aus der Gruppe [NR¹R²R³R⁴]⁺, [PR¹R²R³R⁴]⁺, [P(NR¹R²)₂(NR³R⁴)₂]⁺, [C(NR¹R²)(NR³R⁴)(NR⁵R⁶)]⁺, [(R¹R²N)C(=OR⁷)(NR³R⁴)]⁺, [(R¹R²N)C(=SR⁷)(NR³R⁴)]⁺ oder [(C₆H₆)₃C]⁺ ausgewählt werden, wobei die Phenylgruppen des Trityliums jeweils unabhängig voneinander durch R¹ bis R⁴ substituiert vorliegen können.

R¹ bis R⁷ jeweils unabhängig voneinander Wasserstoff oder geradkettiges oder verzweigtes Alkyl mit 1 bis 20 C-Atomen, geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere, jedoch nicht alle Substituenten R¹ bis R⁷ teilweise oder vollständig mit Halogenen, insbesondere -F und/oder -Cl, oder teilweise mit -CN oder -NO₂, substituiert sein können
und wobei ein oder zwei nicht benachbarte und nicht α-ständige Kohlenstoffatome der Substituenten R¹ bis R⁶ durch Atome und/oder Atomgruppierungen ausgewählt aus der Gruppe -O-, -C(O)-, -C(O)O-, -S-, -S(O)-, -SO₂-, -SO₂O-, -C(O)NH-, -C(O)NR'-, -SO₂NH-, -SO₂NR'-, -N=, -N=N-, -NH-, -NR'-, -PR'-, -P(O)R'-, -P(O)R'-O-, -O-P(O)R'-O-, -P(O)(NR'₂)-NR'- und -PR'₂=N- oder mit den Endgruppen -C(O)X' oder - SO₂X', mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus und X' = F, Cl oder Br, ersetzt sein können.

Unter einer Alklygruppe mit 1 bis 20 C-Atomen versteht man beispielsweise Methyl, Ethyl, Isopropyl, Propyl, Butyl, sek.-Butyl oder tert.-Butyl, ferner auch Pentyl, 1-, 2- oder 3-Methylbutyl, 1,1-, 1,2- oder 2,2-Dimethylpropyl, 1-Ethylpropyl, Hexyl, Heptyl, Octyl, Nonyl, Decyl, C₁₁H₂₃, C₁₂H₂₅, C₁₃H₂₇, C₁₄H₂₉, C₁₅H₃₁, C₁₆H₃₃, C₁₇H₃₅, C₁₈H₃₇, C₁₉H₃₉ oder C₂₀H₄₁. Die Alkylgruppen können auch teilweise oder vollständig mit Halogenen, insbesondere -F und/oder -Cl substituiert sein. Fluorierte Alkylgruppen sind Difluormethyl, Trifluormethyl, Pentafluorethyl, Pentafluorpropyl, Heptafluorpropyl, Heptafluorbutyl oder Nonafluorbutyl.

Ein geradkettiges oder verzweigtes Alkenyl mit 2 bis 20 C-Atomen, wobei auch mehrere Doppelbindungen vorhanden sein können, ist beispielsweise Allyl, 2- oder 3-Butenyl, Isobutenyl, sek.-Butenyl, ferner 4-Pentenyl, iso-Pentenyl, Hexenyl, Heptenyl, Octenyl, -C₉H₁₇, -C₁₀H₁₉ bis -C₂₀H₃₉; vorzugsweise Allyl, 2- oder 3-Butenyl, Isobutenyl, sek.-Butenyl, ferner bevorzugt ist 4-Pentenyl, iso-Pentenyl oder Hexenyl.

Ein geradkettiges oder verzweigtes Alkinyl mit 2 bis 20 C-Atomen, wobei auch mehrere Dreifachbindungen vorhanden sein können, ist beispielsweise Ethinyl, 1- oder 2-Propinyl, 2- oder 3-Butinyl, ferner 4-Pentinyl, 3-Pentinyl, Hexinyl, Heptinyl, Octinyl, -C₉H₁₅, -C₁₀H₁₇ bis -C₂₀H₃₇, vorzugsweise Ethinyl, 1- oder 2-Propinyl, 2- oder 3-Butinyl, 4-Pentinyl, 3-Pentinyl oder Hexinyl.

Unsubstituierte gesättigte oder teilweise oder vollständig ungesättigte Cycloalkylgruppen mit 3-7 C-Atomen sind daher Cyclopropyl, Cyclobutyl, Cyclopentyl, Cyclohexyl, Cycloheptyl, Cyclopentenyl, Cyclopenta-1,3-dienyl, Cyclohexenyl, Cyclohexa-1,3-dienyl, Cyclohexa-1,4-dienyl, Phenyl, Cycloheptenyl, Cyclohepta-1,3-dienyl, Cyclohepta-1,4-dienyl oder Cyclohepta-1,5-dienyl, welche mit C₁- bis C₆-Alkylgruppen substituiert sein können, wobei wiederum die Cycloalkylgruppe oder die mit C₁- bis C₆-Alkylgruppen substituierte Cycloalkylgruppe auch mit Halogenatomen wie F, Cl, Br oder I, insbesondere F oder Cl, CN oder NO₂ substituiert sein kann.

Die Substituenten R¹ bis R⁷ können teilweise oder vollständig mit Halogenatomen, insbesondere mit F und/oder Cl, oder teilweise mit CN oder NO₂ substituiert sein.

Ferner können die Substituenten R¹ bis R⁶ durch ein oder zwei, einander nicht benachbarte Heteroatome oder Atomgruppierungen, ausgewählt aus der Gruppe -O-, -C(O)-, -C(O)O-, -S-, -S(O)-, -SO₂-, -SO₂O-, -C(O)NH-, - C(O)NR'-, -SO₂NH-, -SO₂NR'-, -N=, -N=N-, -NH-, -NR'-, -PR'-, -P(O)R'-, - P(O)R'-O-, -O-P(O)R'-O-, -P(O)(NR'₂)-NR'- und -PR'₂=N- oder mit den Endgruppen -C(O)X' oder -SO₂X', mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus und X' = F, Cl oder Br, ersetzt sein, die nicht α-ständig zu einem Stickstoffatom oder Phosphoratom stehen.

In R' ist C₃- bis C₇-Cycloalkyl beispielweise Cyclopropyl, Cyclobutyl, Cyclopentyl, Cyclohexyl oder Cycloheptyl.

In R' bedeutet substituiertes Phenyl, durch C₁- bis C₆-Alkyl, C₁- bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, COOH, C(O)NH₂, C(O)NHR", C(O)NR"₂, SO₂OR", SO₂X', SO₂NH₂, SO₂NHR", SO₂NR"₂, SO₃H, NR"C(O)R" oder NHC(O)R" substituiertes Phenyl, wobei X' F, Cl oder Br und R" ein nicht, teilweise oder perfluoriertes C₁- bis C₆-Alkyl oder C₃- bis C₇-Cycloalkyl wie für R' definiert bedeutet, beispielsweise, o-, m- oder p-Methylphenyl, o-, m- oder p-Ethylphenyl, o-, m- oder p-Propylphenyl, o-, m- oder p-Isopropylphenyl, o-, m- oder p-tert.-Butylphenyl, o-, m- oder p-Aminophenyl, o-, m- oder p-(N,N-Dimethylamino)phenyl, o-, m- oder p-Nitrophenyl, o-, m- oder p-Hydroxyphenyl, o-, m- oder p-Methoxyphenyl, o-, m- oder p-Ethoxyphenyl, o-, m-, p-(Trifluorrrethyl)phenyl, o-, m-, p-(Trifluormethoxy)phenyl, o-, m-, p-(Trifluormethylsulfonyl)phenyl, o-, m- oder p-Fluorphenyl, o-, m- oder p-Chlorphenyl, o-, m- oder p-Bromphenyl, o-, m- oder p-Iodphenyl, weiter bevorzugt 2,3-, 2,4-, 2,5-, 2,6-, 3,4- oder 3,5-Dimethylphenyl, 2,3-, 2,4-, 2,5-, 2,6-, 3,4- oder 3,5-Dihydroxyphenyl, 2,3-, 2,4-, 2,5-, 2,6-, 3,4- oder 3,5-Difluorphenyl, 2,3-, 2,4-, 2,5-, 2,6-, 3,4- oder 3,5-Dichlorphenyl, 2,3-, 2,4-, 2,5-, 2,6-, 3,4- oder 3,5-Dibromphenyl, 2,3-, 2,4-, 2,5-, 2,6-, 3,4- oder 3,5-Dimethoxyphenyl, 5-Fluor-2-methylphenyl, 3,4,5-Trimethoxyphenyl oder 2,4,5-Trimethylphenyl.

In R' wird als Heterocyclus ein gesättigter oder ungesättigter mono- oder bicyclischer heterocyclischer Rest mit 5 bis 13 Ringgliedern verstanden, wobei 1, 2 oder 3 N- und/oder 1 oder 2 S- oder O-Atome vorliegen können und der heterocyclische Rest ein- oder mehrfach durch C₁- bis C₆-Alkyl, C₁-bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, COOH, C(O)NH₂, C(O)NHR", C(O)NR"₂, SO₂OR", SO₂X', SO₂NH₂, SO₂NHR", SO₂NR"₂, SO₃H, NR"C(O)R" oder NHC(O)R" substituiert sein kann, wobei X' und R" eine zuvor angegebene Bedeutung haben.

Der heterocyclische Rest ist vorzugsweise substituiertes oder unsubstituiertes 2- oder 3-Furyl, 2- oder 3-Thienyl, 1-, 2- oder 3-Pyrrolyl, 1-, 2-, 4- oder 5-Imidazolyl, 3-, 4- oder 5-Pyrazolyl, 2-, 4- oder 5-Oxazolyl, 3-, 4- oder 5-Isoxazolyl, 2-, 4- oder 5-Thiazolyl, 3-, 4- oder 5-Isothiazolyl, 2-, 3-oder 4-Pyridyl, 2-, 4-, 5- oder 6-Pyrimidinyl, weiterhin bevorzugt 1,2,3-Triazol-1-, -4- oder -5-yl, 1,2,4-Triazol-1-, -4- oder -5-yl, 1- oder 5-Tetrazolyl, 1,2,3-Oxadiazol-4- oder -5-yl 1,2,4-Oxadiazol-3- oder -5-yl, 1,3,4-Thiadiazol-2- oder -5-yl, 1,2,4-Thiadiazol-3- oder -5-yl, 1,2,3-Thiadiazol-4- oder -5-yl, 2-, 3-, 4-, 5- oder 6-2H-Thiopyranyl, 2-, 3- oder 4-4H-Thiopyranyl, 3- oder 4-Pyridazinyl, Pyrazinyl, 2-, 3-, 4-, 5-, 6- oder 7-Benzofuryl, 2-, 3-, 4-, 5-, 6- oder 7-Benzothienyl, 1-, 2-, 3-, 4-, 5-, 6- oder 7-1H-Indolyl, 1-, 2-, 4- oder 5-Benzimidazolyl, 1-, 3-, 4-, 5-, 6- oder 7-Benzopyrazolyl, 2-, 4-, 5-, 6- oder 7-Benzoxazolyl, 3-, 4-, 5-, 6- oder 7-Benzisoxazolyl, 2-, 4-, 5-, 6- oder 7-Benzthiazolyl, 2-, 4-, 5-, 6- oder 7-Benzisothiazolyl, 4-, 5-, 6- oder 7-Benz-2,1,3-oxadiazolyl, 1-, 2-, 3-, 4-, 5-, 6-, 7- oder 8-Chinolinyl, 1-, 3-, 4-, 5-, 6-, 7- oder 8-Isochinolinyl, 1-, 2-, 3-, 4-oder 9-Carbazolyl, 1-, 2-, 3-, 4-, 5-, 6-, 7-, 8- oder 9-Acridinyl, 3-, 4-, 5-, 6-, 7- oder 8-Cinnolinyl, 2-, 4-, 5-, 6-, 7- oder 8-Chinazolinyl oder 1-, 2- oder 3-Pyrrolidinyl.

Ohne Einschränkung der Allgemeinheit sind Beispiele für Substituenten R¹ bis R⁶ oder auch nachfolgend für die Substituenten R¹' bis R⁴': -CH₃, -C₂H₅, -C₃H₇, -CH(CH₃)₂, -C₄H₉, -C(CH₃)₃, -C₅H₁₁, -C₆H₁₃, -C₇H₁₅, -C₈H₁₇, -C₉H₁₉, -C₁₀H₂₁, -C₁₂H₂₅, -C₂₀H₄₁, -CH₂OCH₃, -C₂H₄OCH(CH₃)₂, -C₂H₄SC₂H₅, -C₂H₄SCH(CH₃)₂, -CH₂SO₂CH₃. -CH₂N(H)C₂H₅, -C₂H₄N(H)C₂H₅, -CH₂N(CH₃)CH₃, -CN, -C₂H₄N(CH₃)CH₃, -CF₃, -C₂F₅, -C₃F₇, -C₄F₉, -C(CF₃)₃, -CH₂SO₂CF₃, -CF₂SO₂CF₃, -C₂F₄N(C₂F₅)C₂F₅, -CHF₂, -CH₂CF₃, C₂F₄H, -C₂F₂H₃, -C₃FH₆, -CH₂C₃F₇, -C(CFH₂)₃, -CH₂C(O)OH, -CH₂C₆H₅, -CH₂C(O)CH₃, -CH₂C(O)C₂H₅, -CH₂C(O)OCH₃, CH₂C(O)OC₂H₅, -C(O)CH₃, -C(O)C₆H₅, -C(O)OCH₃, -C(O)OC₂H₅,

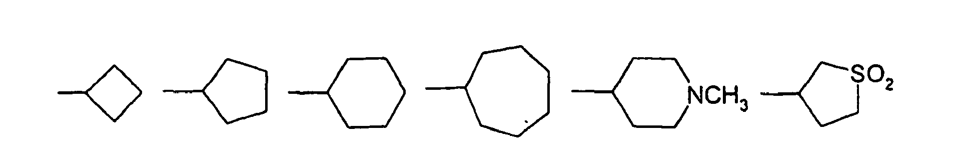

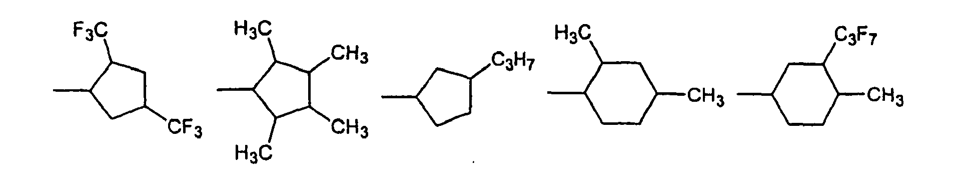

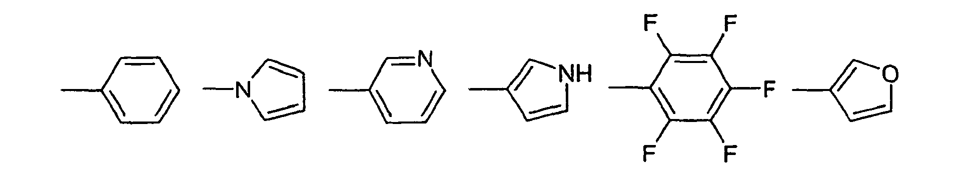

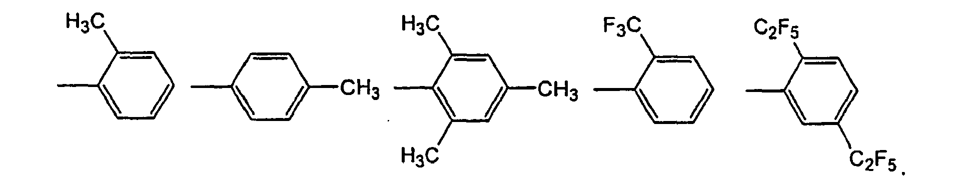

Bis zu vier Substituenten des Guanidinium-Kations
[C(NR¹R²)(NR³R⁴)(NR⁵R⁶)]⁺ können auch paarweise derart verbunden sein, dass mono-, bi- oder polycyclische Kationen entstehen.
Ohne Einschränkung der Allgemeinheit sind Beispiele für solche Guanidinium-Kationen: 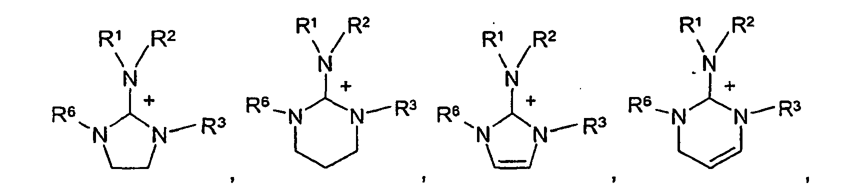 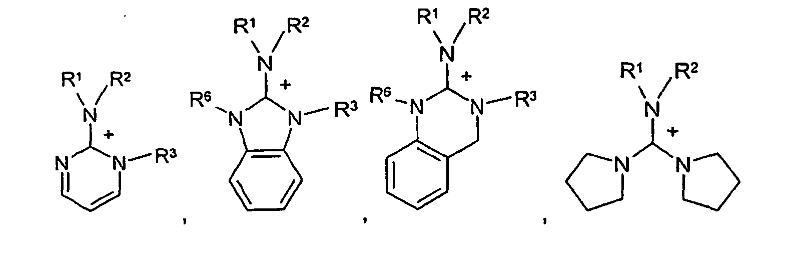 oder 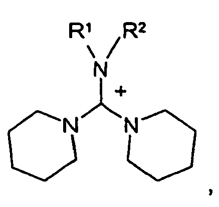 wobei die Substituenten R¹ bis R³ und R⁶ eine zuvor angegebene oder besonders bevorzugte Bedeutung haben können. Gegebenenfalls können die Carbocyclen oder Heterocyclen der zuvor angegebenen Guanidinium-Kationen noch durch C₁- bis C₆-Alkyl, C₁- bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, COOH, C(O)NH₂, C(O)NHR", C(O)NR"₂, SO₂OR", SO₂NH₂, SO₂NHR", SO₂NR"₂, SO₂X', SO₃H, NR"C(O)R" oder NHC(O)R" substituiert sein, wobei X' und R" eine zuvor angegebene Bedeutung haben, substituiertes oder unsubstituiertes Phenyl oder unsubstituierter oder substituierter Heterocyclus substituiert sein.

Bis zu vier Substituenten des Uroniumkations [(R¹R²N)-C(=OR⁷)(NR³R⁴)]⁺ oder des Thiouroniumkations [(R¹R²N)-C(=SR⁷)(NR³R⁴)]⁺ können auch paarweise derart verbunden sein, dass mono-, bi- oder polycyclische Kationen entstehen.

Ohne Einschränkung der Allgemeinheit sind Beispiele für solche Kationen im folgenden angegeben, wobei X = O oder S bedeutet: 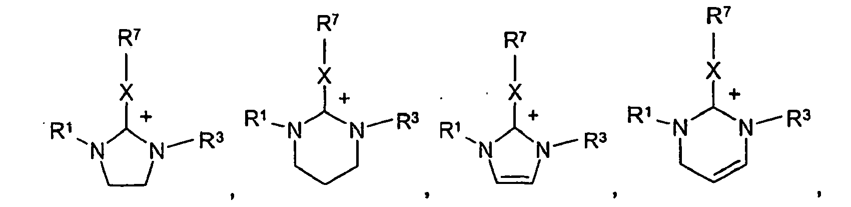 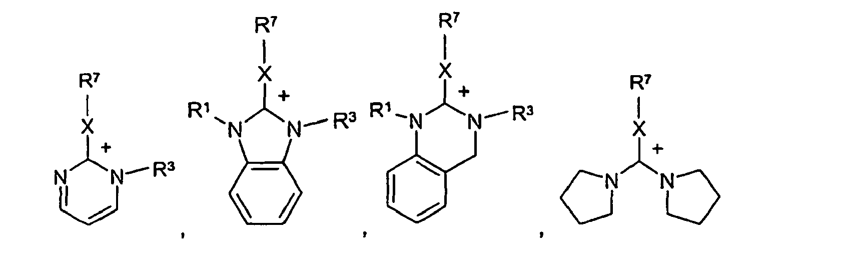 oder 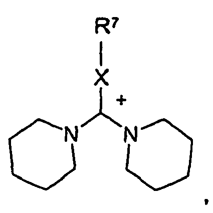 wobei die Substituenten R¹, R³ und R⁷ eine zuvor angegebene oder besonders bevorzugte Bedeutung haben können. Gegebenenfalls können die Carbocyclen oder Heterocyclen der zuvor angegebenen Kationen noch durch C₁- bis C₆-Alkyl, C₁- bis C₆-Alkenyl, NO₂, F, Cl, Br, I, OH, C₁-C₆-Alkoxy, CN, SCN, SCF₃, SO₂CF₃, C(O)O-C₁-C₆-Alkyl, NH₂, C₁-C₆-Alkylamino oder C₁-C₆-Dialkylamino, COOH, C(O)NH₂, C(O)NHR", C(O)NR"₂, SO₂OR", SO₂NH₂, SO₂NHR", SO₂NR"₂, SO₂X', SO₃H, NR"C(O)R" oder NHC(O)R" oder substituiertes oder unsubstituiertes Phenyl oder unsubstituierter oder substituierter Heterocyclus substituiert sein, wobei X' und R" eine zuvor angegebene Bedeutung haben.

Besonders bevorzugt wird das organische Kation aus der Gruppe der Ammonium-, Phosphonium- oder Guanidiniumsalze ausgewählt.

Die Substituenten R¹ bis R⁷ sind jeweils unabhängig voneinander bevorzugt eine geradkettige oder verzweigte Alkylgruppe mit 1 bis 4 C-Atomen. Besonders bevorzugt sind R¹ bis R⁷ Methyl, Ethyl, Propyl, i-Propyl oder Butyl.

Besonders bevorzugt sind die Substituenten R¹ bis R⁴ der Formeln [NR¹R²R³R⁴]⁺ oder [PR¹R²R³R⁴]⁺ gleich.

Das organische Kation kann weiterhin aus der Gruppe der heterocyclischen Kationen ausgewählt werden. Heterocyclische Kationen sind beispielsweise 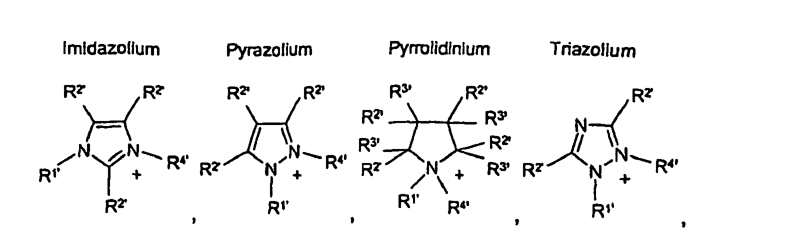 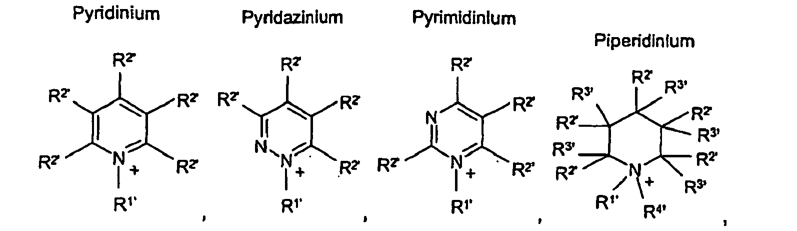 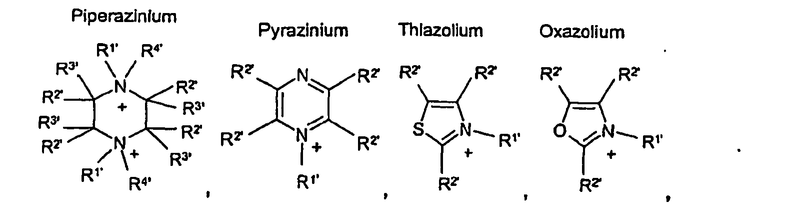 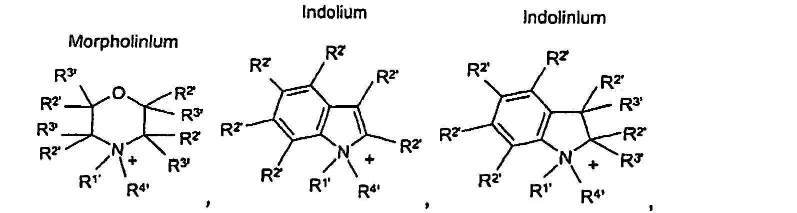 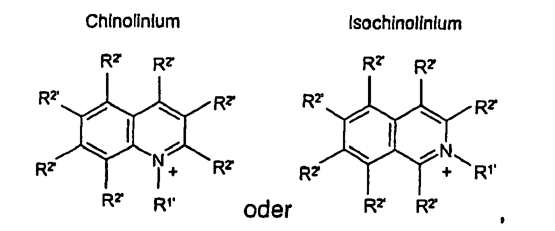 wobei die Substituenten
R¹' bis R⁴' jeweils unabhängig voneinander
Wasserstoff,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann,
gesättigtes, teilweise oder vollständig ungesättigtes Heteroaryl, Heteroaryl-C₁-C₆-alkyl oder Aryl-C₁-C₆-alkyl bedeutet,
wobei ein oder mehrere Substituenten R¹' bis R⁴' teilweise oder vollständig mit Halogenen, insbesondere -F und/oder -Cl, oder teilweise mit -CN oder - NO₂, substituiert sein können, wobei R¹' und R⁴' nicht gleichzeitig perfluoriert oder perchloriert sein können,
und wobei ein oder zwei nicht benachbarte und nicht in α-Position zum Heteroatom stehende Kohlenstoffatome der Substituenten R¹' bis R⁴', durch Atome und/oder Atomgruppierungen ausgewählt aus der Gruppe -O-, -C(O)-, -C(O)O-, -S-, -S(O)-, -SO₂-, -SO₂O-. -C(O)NH-, -C(O)NR'-, -SO₂NH-, -SO₂NR'-, -N=, -N=N-, -NH-, -NR'-, -PR'-, -P(O)R'-, -P(O)R'-O-, -O-P(O)R'-O-, -P(O)(NR'₂)-NR'- und -PR'₂=N- oder mit den Endgruppen - C(O)X' oder -SO₂X', mit R' = nicht, teilweise oder perfluoriertes C₁- bis C₆-Alkyl, C₃- bis C₇-Cycloalkyl, unsubstituiertes oder substituiertes Phenyl oder unsubstituierter oder substituierter Heterocyclus und X' = F, Cl oder Br, ersetzt sein können.

Aryl bedeutet unsubstituiertes oder substituiertes Phenyl oder Naphthyl, vorzugsweise Phenyl.

Aryl-C₁-C₆-alkyl bedeutet beispielsweise Benzyl, Phenylethyl, Phenylpropyl, Phenylbutyl, Phenylpentyl oder Phenylhexyl. Fluoriertes Aryl-C₁-C₆-alkyl bedeutet beispielsweise Pentafluorphenyldifluormethyl, Pentafluorphenyltetrafluorethyl oder Pentafluorphenylethyl.

Die Bezeichnung Heteroaryl ist identisch mit der Bezeichnung heterocyclischer Rest, wie zuvor beschrieben. Ein Substituent mit der Bezeichnung Heteroaryl-C₁-C₆-alkyl ist aus einem Heteroaryl, wie zuvor beschrieben und einer Alkylenkette mit 1 bis 6 C-Atomen zusammengesetzt, wie bei dem Begriff Aryl-C₁-C₆-alkyl schon anschaulich beschrieben.

Besonders bevorzugt sind die Substituenten R¹' bis R⁴' eine geradkettige oder verzweigte Alkylgruppe mit 1 bis 20 C-Atomen, ganz besonders bevorzugt mit 1 bis 12 C-Atomen.

Aus der Gruppe der heterocyclischen organischen Kationen werden besonders bevorzugt die Kationen substituiertes Imidazolium, substituiertes Pyridinium, substituiertes Pyrrolidinium, substituiertes Piperidinium oder substituiertes Morpholinium, wie zuvor definiert, ausgewählt.

Die erfindungsgemäßen Salze der Formel (II) mit organischen Kationen, wie zuvor beschrieben, können als ionische Flüssigkeiten verwendet werden. Ionische Flüssigkeiten können beispielsweise als Lösemittel für viele synthetische oder katalytische Reaktionen eingesetzt werden, z.B. Friedel-Crafts-Acylierung und -Alkylierung, Diels-Alder-Cycloadditionen, Hydrogenierungs- und Oxidationsreaktionen, Michael-Typ-Reaktionen oder Heck-Reaktionen, als nichtwässrige Elektrolyte, die gegebenenfalls in Kombination mit anderen, dem Fachmann bekannten Leitsalzen, Zusatzstoffen und Lösemitteln eingesetzt werden.

Daneben können diese ionischen Flüssigkeiten als nichtwässrige polare Substanzen in geeigneten Reaktionen als Phasentransferkatalysator, als Surfactant (surface active agent = grenzflächenaktive Stoffe), als Weichmacher (plasticizer) oder als Medium zur Heterogenisierung von homogenen Katalysatoren verwendet werden.

Sie sind weiterhin geeignet als Trocknungsmittel, Wärmeübertragungsmittel und als Trennmittel für Gase.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Es versteht sich für den Fachmann von selbst, dass in den vorab und nachfolgend genannten Verbindungen Substituenten wie beispielsweise H, N, O, Cl, F durch die entsprechenden Isotope ersetzt sein können.

Die NMR-Spektren wurden an Lösungen in deuterierten Lösemitteln bei 20°C an einem Bruker Avance 300 Spektrometer mit einem 5 mm Breitbandkopf ¹H/BB mit Deuterium Lock gemessen, falls nicht in den Beispielen angegeben. Die Messfrequenzen der verschiedenen Kerne sind: ¹H: 300,13 MHz, ¹¹B: 96,92 MHz, ¹⁹F: 282,41 MHz und ³¹P: 121,49 MHz. Die Methode der Referenzierung wird bei jedem Spektrum bzw. bei jedem Datensatz separat angegeben.

### Beispiele:

### Beispiel 1:

### Synthese von Tris(trifluormethyl)cyanoborsäure

### 1. Stufe

In einem Glasfinger mit einem Ventil mit einer PTFE-Spindel werden in einer Trockenbox 113 mg (0.4 mmol) K[(CF₃)₃BCN] (Synthese wird in Beispiel 5 beschrieben) eingewogen. An einer Vakuumapparatur werden 2 ml Trimethylsilyliodid bei -196°C einkondensiert. Das Reaktionsgemisch wird bei Raumtemperatur gerührt. Nach 10 Stunden wird das überschüssige Trimethylsilyliodid im Vakuum entfernt und der Rückstand mit Dichlormethan extrahiert. Die Suspension wird in einer Inertgasatmosphäre durch eine mit Filterhilfe überschichteten Glasfritte filtriert, und die Lösung in einem Schlenk-Kolben aufgefangen. Anschließend werden das Reaktionsgefäß und die Fritte mit Dichlormethan nachgewaschen. Das Lösemittel wird im Vakuum entfernt und der Rückstand im NMR analysiert. Es handelt sich um 95%iges [(CF₃)₃BCN]SiMe₃.
¹⁹F NMR Spektrum, ppm (Solvent: CD₂Cl₂; Standard: CCl₃F- extern): -60.7 q (CF₃)-
¹H NMR Spektrum, ppm (Solvent: CD₂Cl₂ ; Standard: TMS): 0.6 s (3CH₃). ¹¹B NMR Spektrum, ppm (Solvent: CD₂Cl₂ ; Standard: BF₃ ·Et₂O/CD₃CN - extern): -20.8 m; ²J_{B,F} = 30 Hz.

### 2. Stufe

In einer Trockenbox werden 80 mg (0.25 mmol) [(CF₃)₃BCN]SiMe₃ in einen Kolben eingefüllt. 5 ml wasserfreie HF werden unter Rühren an einer Edelstahlapparatur im Vakuum bei -196°C einkondensiert. Das Reaktionsgemisch wird anschließend eine Stunde bei Raumtemperatur gerührt. Alle flüchtigen Bestandteile werden abgepumpt. Man erhält mit einer Ausbeute von 90% Tris(trifluormethyl)cyanoborsäure, [(CF₃)₃BCN]H.
¹⁹F NMR Spektrum, ppm (Solvent: CD₂Cl₂; Standard: CCl₃F- extern): -60.4 q (CF₃).
¹H NMR Spektrum, ppm (Solvent: CD₂Cl₂ Standard: TMS): 9.0 br.s (CNH).
¹¹B NMR Spektrum, ppm (Solvent: CD₂Cl₂ ; Standard: BF₃ ·Et₂O / CD₃CN - extern): -20.7 m; ²J_{B,F}= 30 Hz.

### Beispiel 2:

Synthese von Tris(trifluormethyl)cyanoborsäure Etherat [(CF₃)₃BCN]H * Et₂O

109 mg (0.39 mmol) K[(CF₃)₃BCN] werden in einen Glasfinger mit einem Ventil mit einer PTFE-Spindel eingewogen. Im Vakuum bei -196°C werden 5 ml Diethylether gefolgt von 0.9 mmol HCl einkondensiert. Das Reaktionsgemisch wird mehrere Stunden bei Raumtemperatur gerührt. Sofort nach Erwärmen beginnt ein farbloser Feststoff auszufallen. Im Vakuum werden alle flüchtigen Bestandteile entfernt. Der Rückstand wird in Dichlormethan aufgenommen. In einer N₂-Atmosphäre wird der Feststoff durch eine mit Filterhilfe überschichtete Glasfritte filtriert. Die Lösung wird eingeengt und es bleibt ein Feststoff zurück. Man erhält mit einer Ausbeute von 61 % Tris(trifluormethyl)cyanoborsäure Etherat.
¹⁹F NMR Spektrum, ppm (Solvent: CD₂Cl₂; Standard: CCl₃F- extern): -61.6 q (CF₃).
¹H NMR Spektrum, ppm (Solvent: CD₂Cl₂ ; Standard: TMS): 13.5 br.s (CNH).
¹¹B NMR Spektrum, ppm (Solvent: CD₂Cl₂ ; Standard: BF₃ ·Et₂O / CD₃CN - extern): -21.8 m; ²J_{B,F} = 30 Hz.

### Beispiel 3:

### Synthese von [(CF₃)₄B]H * 2 Et₂O

In einem Kolben mit Ventil und PTFE-Spindel werden 546 mg (1,68 mmol) K[B(CF₃)₄] eingewogen und im Vakuum sorgfältig getrocknet. 80 ml Diethylether werden aufkondensiert und der Kolben auf -50°C abgekühlt. Die Lösung wird während der Reaktion permanent gerührt. In einen zweiten Kolben mit Ventil mit PTFE-Spindel werden bei Raumtemperatur ca. 12 mmol HCl einkondensiert. Die Ventile beider Kolben werden geöffnet. Bereits wenige Minuten nachdem das gasförmige HCl mit der Diethylether-Lösung in Kontakt gebracht wird, fällt weißer Feststoff aus der Lösung aus. Die Temperatur der Lösung wird niedriger als -20°C eingestellt. Nach 5 Stunden werden alle flüchtigen Substanzen im Vakuum entfernt. Auf den weißen Rückstand wird mit Stickstoff durch eine PFA-Kanüle wasserfreies Dichlormethan gegeben. Die Suspension wird durch eine mit Celit gepackte Schlenk-Fritte filtriert und man erhält eine klare Lösung. Im Vakuum wird Dichlormethan entfernt und [(CF₃)₄B]H * 2 Et₂O in eine Trockenbox überführt. Man erhält 530 mg, das entspricht einer Ausbeute von 73%.
¹⁹F NMR Spektrum, ppm (Solvent: CD₂Cl₂; Standard: CCl₃F- intern): -61.6 q (CF₃), ²J_{B,F} = 25,9 Hz.
¹H NMR Spektrum, ppm (Solvent: CD₂Cl₂ ; Standard: TMS): 1,44 t (12H), ³J_{H,H} = 7,16 Hz, 4,11q (8H), ³J_{H,H} = 7,16 Hz, 16,25 s (1H).
¹¹B NMR Spektrum, ppm (Solvent: CD₂Cl₂ ; Standard: BF₃ -Et₂O / CD₃CN - extern): -18.9 m; ²J_{B,F} = 25,9 Hz.

### Beispiel 4:

### Synthese von Tetracyanoborsäure Monohydrat

### 1. Stufe:

BF₃*O(C₂H₅)₂ + 4 (CH₃)₃SiCN ---> [(CH₃)₃Si[B(CN)₄] + 3 (CH₃)₃SiF + (C₂H₅)₂O

In einem Kolben werden utner Feuchtigkeitsausschluß 100 ml (86.3 g, 0.87 mol) Trimethylsilylcyanid mit 12 ml (13.1 g, 0.092 mol) Bortrifluoridetherat umgesetzt. Die Lösung wird leicht warm. Nach 15 Minuten wird das Reaktionsgemisch auf 30-40°C 18 Stunden lang erwärmt, wobei ein Feststoff ausfällt. Das Produkt wird unter Feuchtigkeitsasusschluß abfiltriert und mit 10 ml Chloroform, 10 ml Toluol und 20 ml Pentan hintereinander gewaschen. Nach dem Trocknen im Vakuum werden 3.5 g (0.018 mol) [(CH₃)₃Si][B(CN)₄] erhalten, das entspricht einer Ausbeute von 20%.

### 2. Stufe

2 [(CH₃)₃Si][B(CN)₄] + 3 H₂O --> 2 H[B(CN)₄] + [(CH₃)₃Si)]₂O 3.5 g [(CH₃)₃Si][B(CN)₄] werden unter Eiskühlung mit 60 ml Wasser umgesetzt. Es bilden sich zwei Phasen aus einer wässrigen Lösung und [(CH₃)₃Si)]₂O. Die wässrige Lösung wierd abgetrennt und im Vakuum eingeengt. Es werden 80 ml Dichlormethan und 40 ml Diethylether auf den Rückstand einkondensiert. Die Lösung wird abfiltriert und im Vakuum eingeengt. Das entstandene Etherat wird in 20 ml Wasser gelöst und im Vakuum eingeengt. Die Zugabe von Wasser mit anschließendem Einengen wird noch zwei mal wiederholt. So entstandenes Produkt wird 20 Stunden im Vakuum (10-3 mbar) getrocknet. Man erhält 2.115 g (0.016 mol) Tetracyanoborsäure Monohydrat, H[B(CN)₄] * H₂O, das entspricht einer Ausbeute von 17%.
¹H NMR Spektrum, ppm (Solvent: CD₃CN ; Standard: TMS): 10,3 s (1H). ¹¹B NMR Spektrum, ppm (Solvent: CD₃CN ; Standard: BF₃ Et₂O - extern): -38.6 m; ²J_{C,B} = 71,1 Hz.

Elementaranalyse:

| | | | |
|---|---|---|---|
| berechnet H₃C₄BN₄O | C: 35.88% | H: 2.26% | N: 41.84% |
| gefunden: | C: 35.69% | H: 2.96% | N: 42.14%. |

### Beispiel 5:

### Synthese von K[(CF₃)₃BCN]

### 1. Stufe: Synthese von Tris(trifluormethyl)isocyanoborsäure

In einem Kolben mit einem Ventil und einer PTFE-Spindel werden an einer Vakuumapparatur 2.04 g (8.3 mmol) Carbonyltris(trifluormethyl)boran, 20 ml Dichlormethan und 13.1 mmol HCN bei -196°C einkondensiert. Die Reaktionsmischung wird auf -80°C erwärmt und unter Rühren über Nacht auf Raumtemperatur erwärmt. Im Vakuum werden alle flüchtigen Bestandteile entfernt. Man erhält 1.94 g (7.9 mmol) Tris(trifluormethyl)isocyanoborsäure [(CF₃)₃BNC]H, das entspricht einer Ausbeute von 95%.

Elementaranalyse:

| | | | |
|---|---|---|---|
| berechnet C4HBF9N | C: 19.62% | H: 0.41% | N: 5.72% |
| gefunden: | C: 19.80% | H: 0.40% | N: 5.80%. |

### 2. Stufe: Synthese von K[(CF₃)₃BNC]

1.12 g (4.6 mmol) Tris(trifluormethyl)isocyanoborsäure, hergestellt nach Beispiel 1, werden in einer Trockenbox in einen Schlenk-Finger mit einem Ventil mit einer PTFE-Spindel eingewogen und es wird ein Tropftrichter aufgesetzt. Ein Kolben mit einem Ventil mit einer PTFE-Spindel wird ebenfalls in einer Trockenbox mit 1.92 g (11.5 mmol) Li[N(SiMe₃)₂] befüllt. Beide Feststoffe werden an einer Vakuumapparatur in je 40 ml Toluol gelöst. Die Lösung des Amids wird in den Tropftrichter überführt. Das Reaktionsgefäß wird auf -20°C abgekühlt und unter Rühren wird die Toluol/Amid-Lösung in zwei Stunden zugetropft. Nach beendeter Zugabe wird das Reaktionsgemisch weitere 30 Minuten bei -20°C gerührt. Anschließend werden 20 ml einer wässrigen KOH/K₂CO₃-Lösung zu dem Gemisch gegeben. Die Toluol-Phase wird abgetrennt und das Lösemittel im Vakuum an einem Rotationsverdampfer entfernt. Der Rückstand wird in 50 ml Diethylether aufgenommen und zu der wässrigen Phase der Reaktion gegeben. Das Reaktionsgemisch wird mit weiteren 100 und 50 ml Diethylether extrahiert. Die vereinten organischen Phasen werden mit Kaliumcarbonat getrocknet und das Gemisch wird anschließend filtriert. An einem Rotationsverdampfer werden alle flüchtigen Bestandteile abgepumpt. Man erhält 1.08 g Kalium tris(trifluormethyl)isocyanoborat, das entspricht einer Ausbeute von 83%.
¹⁹F NMR Spektrum, ppm (Solvent: Acetonitril-D₃; Standard: CCl₃F- extern): -67.0 q (CF₃).
¹¹B NMR Spektrum, ppm (Solvent: Acetonitril-D₃; Standard: BF₃ ·Et₂O / CD₃CN - extern): -17.5 m; ²J_{B,F} = 29 Hz.
¹³C NMR Spektrum, ppm (Solvent: Acetonitril-D₃; Standard: TMS): 131.7 q (CF₃); 172.3 s (NC); ¹J_{C,F} = 305 Hz.

Elementaranalyse:

| | | |
|---|---|---|
| berechnet C₄BF₉KN | C: 16.98% | N: 4.95% |
| gefunden: | C: 17.11 % | N: 5.10%. |

### 3. Stufe: Synthese von K[(CF₃)₃BCN]

515 mg (1.8 mmol) Kalium(tris(trifluormethyl)isocyanoborat) wird in einer Heizkammer auf 240°C mit einer Heizrate von 10 K min-1 aufgeheizt und für weitere 10 Minuten auf 200-240°C temperiert. Während der ' Isomerlsierung wird die Heizkammer permanent mit Stickstoff gespült. Anschließend wird das Salz auf Raumtemperatur gekühlt. Man erhält 515 mg Kalium(tris(trifluormethyl)cyanoborat)..
¹⁹F NMR Spektrum, ppm (Solvent: Acetonitril-D₃ Standard: CCl₃F- extern): -62.1q(CF₃).
¹¹B NMR Spektrum, ppm (Solvent: Acetonitril-D₃; Standard: BF₃ ·Et₂O / CD₃CN - extern): -22.3 m; ²J_{B,F} = 29 Hz.
¹³C NMR Spektrum, ppm (Solvent: Acetonitrit-D₃; Standard: TMS): 132.4 q (CF₃); 127.5 s (CN); ¹J_{C,F} = 303 Hz.

Elementaranalyse:

| | | |
|---|---|---|
| berechnet C₄BF₉KN | C: 16.98% | N: 4.95% |
| gefunden: | C: 16.79% | N: 4.97%. |

### Beispiel 6:

### Synthese von [C(NH₂)₃][(CF₃)₃BCN]

Zu einer Lösung von 1.37 g (14.3 mmol) Guanidiniumchlorid in 150 ml Ethanol wird eine Lösung von 2.50 g (8.8 mmol) K[(CF₃)₃BCN] in 150 ml Ethanol unter Rühren zugegeben. Es wird eine Stunde bei Raumtemperatur gerührt und anschließend das Ethanol abdestilliert. Der farblose Rückstand wird zweimal mit THF extrahiert. Die THF-Lösung wird filtriert und das Lösemittel im Vakuum entfernt. Man erhält 2.55 g (8.4 mmol) Guanidinium tris(trifluormethyl)cyanoborat, das entspricht einer Ausbeute von 95%.
¹⁹F NMR Spektrum, ppm (Solvent: Acetonitril-D₃ ; Standard: CCl₃F- extern): -62.0 q (CF₃).
¹¹B NMR Spektrum, ppm (Solvent: Acetonitril-D₃; Standard: BF₃ ·Et₂O / CD₃CN - extern): -22.3 m; ²J_{B,F} = 29 Hz.
¹H NMR Spektrum, ppm (Solvent: Acetonitril-D₃; Standard: TMS): 6.1 br. s (NH).

### Beispiel 7:

### Synthese von [Ph₃C][(CF₃)₃BCN]

In einen Kolben mit einem Ventil mit einer PTFE-Spindel werden 312 mg (1.1 mmol) K[(CF₃)₃BCN] und 323 mg (1.2 mmol) Triphenylmethylchlorid eingewogen. Im Vakuum werden die Wasserspuren gründlich entfernt. 100 ml wasserfreies Dichlormethan werden in einer Inertgasatmosphäre zu den Feststoffen gegeben. Die Suspension wird über Nacht gerührt. In einer Inertgasatmosphäre wird die Suspension durch eine mit Filterhilfe überschichtet Schlenk-Fritte filtriert und in einem Kolben aufgefangen. Der Reaktionskolben wird zweimal mit Dichlormethan (20 ml, 10 ml) nachgewaschen. Die Flüssigkeit wird anschließend durch die Fritte filtriert. Die Dichlormethanlösung wird im Vakuum auf ein Volumen von ca. 2 ml eingeengt. Durch langsame Zugabe von 25 ml Hexan wird das Trityl-Salz unter ständigem Rühren als Feststoff ausgefällt. Nach einer Stunde wird das Rühren gestoppt und das SProdukt setzt sich ab. Die flüssige Phase wird entfernt. Das Rohprodukt wird mit Hexan gewaschen. Man erhält 445 mg Triphenylmethyl(tris(trifluormethyl)cyanoborat), das entspricht einer Ausbeute von 82%.

Elementaranalyse:

| | | | |
|---|---|---|---|
| berechnet C₂₃H₁₅BF₉N | C: 56.71% | H: 3.10% | N: 2.88% |
| gefunden: | C: 55.85% | H: 3.15% | N: 2.98%. |

## Patentansprüche

1. Salze der allgemeinen Formel (II)
[B(R^{F})_{4-x-y}(CN)ₓF_{y}]ₐ⁻ M^{a+} (II)
wobei
x = 1, 2 oder 3,
y = 0 oder 1,
x+y = 1, 2 oder 3,
a = 1 oder 2 ist,
und worin
die Liganden R^{F} gleich oder verschieden sein können und R^{F} für eine perfluorierte oder teilfluorierte C₁₋₁₂-Alkyl-Gruppe steht und wobei die CN-Gruppe sowohl über das C-Atom an das B-Atom gebunden vorliegt und
M^{a+} ein organisches Kation ist, welches ausgewählt wird aus der Gruppe
[NR¹R²R³R⁴]⁺, [PR¹R²R³R⁴]⁺, [P(NR¹R²)₂(NR³R⁴)₂]⁺, [C(NR¹R²)(NR³R⁴)(NR⁵R⁶)]⁺, [(R¹R²N)-C(=OR⁷)(NR³R⁴)]⁺ oder [(R¹R²N)-C(=SR⁷)(NR³R⁴)]⁺, worin
R¹ bis R⁷ jeweils unabhängig voneinander
Wasserstoff,
geradkettiges oder verzweigtes Alkyl mit 1 bis 20 C-Atomen, geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, bedeutet,
wobei ein oder mehrere der Substituenten R¹ bis R⁷ teilweise oder vollständig mit Halogenen, insbesondere -F und/oder -Cl, oder teilweise mit -CN oder -NO₂, substituiert sein können
und wobei ein oder zwei nicht benachbarte und nicht α-ständige Kohlenstoffatome der Substituenten R¹ bis R⁶ durch Atome und/oder Atomgruppierungen ausgewählt aus der Gruppe -O-, -C(O)-, -C(O)O-, - S-, -S(O)-, -SO₂-, -SO₂O-, -C(O)NH-, -C(O)NR'-, -SO₂NH-, -SO₂NR'-, - N=, -N=N-, -NH-, -NR'-, -PR'-, -P(O)R'-, -P(O)R'-O-, -O-P(O)R'-O-, -P(O)(NR'₂)-NR'- und -PR'₂=N- oder mit den Endgruppen -C(O)X' oder-SO₂X', mit R' = nicht, teilweise oder perfluoriertes C₁- bis C₆-Alkyl, C₃-bis C₇-Cycloalkyl, unsubstituiertes oder substituiertes Phenyl oder unsubstituierter oder substituierter Heterocyclus und X' = F, Cl oder Br,
ersetzt sein können,
ausgenommen [NH₄][B(CF₃)₃CN],
oder das organische Kation ein heterocyclisches Kation ist, welches ausgewählt wird aus der Gruppe 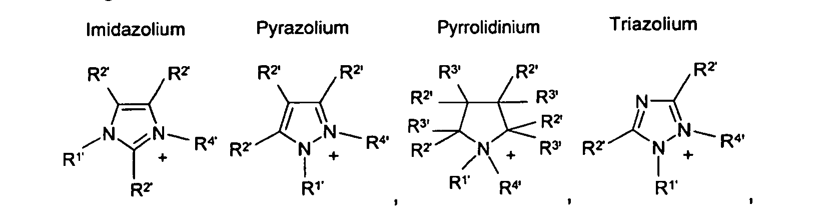 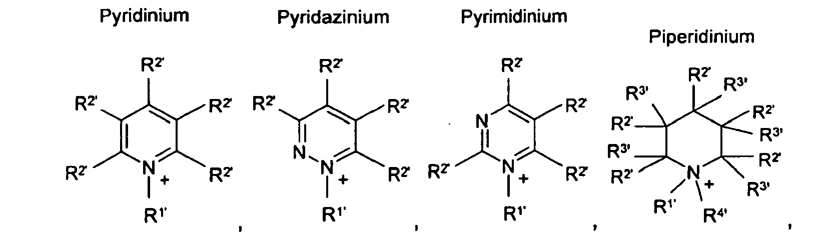 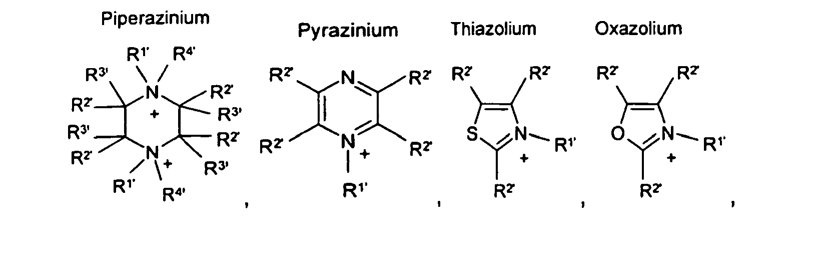 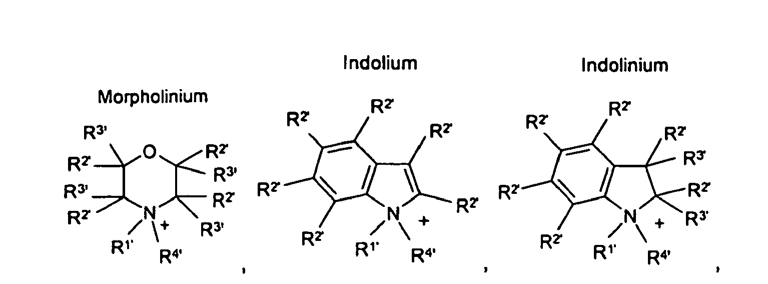 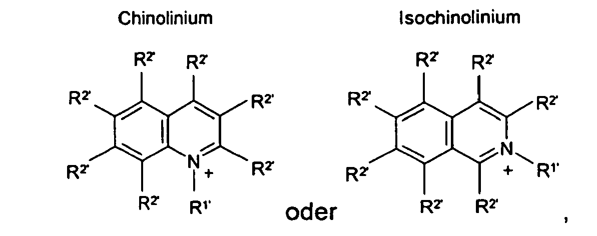 wobei die Substituenten
R¹' bis R⁴' jeweils unabhängig voneinander
Wasserstoff,
geradkettiges oder verzweigtes Alkyl mit 1-20 C-Atomen,
geradkettiges oder verzweigtes Alkenyl mit 2-20 C-Atomen und einer oder mehreren Doppelbindungen,
geradkettiges oder verzweigtes Alkinyl mit 2-20 C-Atomen und einer oder mehreren Dreifachbindungen,
gesättigtes, teilweise oder vollständig ungesättigtes Cycloalkyl mit 3-7 C-Atomen, das mit Alkylgruppen mit 1-6 C-Atomen substituiert sein kann, gesättigtes, teilweise oder vollständig ungesättigtes Heteroaryl, Heteroaryl-C₁-C₆-alkyl oder Aryl-C₁-C₆-alkyl bedeutet,
wobei ein oder mehrere Substituenten R¹' bis R⁴' teilweise oder vollständig mit Halogenen, insbesondere -F und/oder -Cl, oder teilweise mit -CN oder -NO₂. substituiert sein können, wobei R¹' und R⁴' nicht gleichzeitig perfluoriert oder perchloriert sein können
und wobei ein oder zwei nicht benachbarte und nicht in α-Position zum Heteroatom stehende Kohlenstoffatome der Substituenten R¹' bis R⁴', durch Atome und/oder Atomgruppierungen ausgewählt aus der Gruppe - O-, -C(O)-, -C(O)O-, -S-, -S(O)-, -SO₂-, -SO₂O-, -C(O)NH-, -C(O)NR'-, - SO₂NH-, -SO₂NR'-, -N=, -N=N-, -NH-, -NR'-, -PR'-, -P(O)R'-, -P(O)R'-O-, -O-P(O)R'-O-, -P(O)(NR'₂)-NR'- und -PR'₂=N- oder mit den Endgruppen - C(O)X' oder -SO₂X', mit R' = nicht, teilweise oder pefluoriertes C₁- bis C₆-Alkyl, C₃- bis C₇-Cycloalkyl, unsubstituiertes oder substituiertes Phenyl oder unsubstituierter oder substituierter Heterocyclus und X' = F, Cl oder Br, ersetzt sein können.

2. Verfahren zur Herstellung eines Salzes der Formel (II) gemäß Anspruch 1 in einer Urnsalzungsreaktion, **dadurch gekennzeichnet, dass** ein Alkalimetallsalz der Formel (II) nach Anspruch 1 mit einer Verbindung der Formel (III)
MA (III),
wobei
M ein organisches Kation nach Anspruch 1 ist und
A OH⁻, F⁻, Cl⁻, Br⁻, I⁻, [HF₂]⁻, [CN]⁻, [SCN]⁻, [CH₃COO]⁻, [CH₃SO₃]⁻, [CF₃COO]⁻, [CF₃SO₃]⁻, [CH₃OSO₃]⁻, [BF₄]⁻, [SO₄]²⁻, [NO₃]⁻ ,[C₂H₅OSO₃]⁻, [(C₂F₅)₂P(O)O]⁻, [C₂F₅P(O)O₂]²⁻, Tosylate, Malonate, substituierte Malonate oder [CO₃]²⁻ bedeutet
umgesetzt wird.

3. Verwendung eines Salzes gemäß Anspruch 1 als Katalysator, Phasentransferkatalysator, Lösemittel, ionische Flüssigkeit oder als Leitsalz in den Elektrolyten von elektrochemischen Vorrichtungen.

## Claims

1. Salts of the general formula (II)
[B(R^{F})_{4-x-y}(CN)ₓF_{y}]ₐ⁻ M^{a+} (II)
where
x=1, 2 or 3,
y=0 or 1,
x+y≤1, 2 or 3,
a = 1 or 2,
and in which
the ligands R^{F} may be identical or different and R^{F} stands for a perfluorinated or partially fluorinated C₁₋₁₂-alkyl group and where the CN group is bonded to the B atom via the C atom and
M^{a+} is an organic cation which is selected from the group [NR¹R²R³R⁴]⁺, [PR¹R²R³R⁴]⁺, [P(NR¹R²)₂(NR³R⁴)₂]⁺, [C(NR¹R²)(NR³R⁴)(NR⁵R⁶)⁺, [(R¹R²N)-C(=OR⁷)(NR³R⁴)⁺ or [(R¹R²N)-C(=SR⁷)(NR³R⁴)]⁺, in which
R¹ to R⁷ each, independently of one another, denote hydrogen,
straight-chain or branched alkyl having 1 to 20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by alkyl groups having 1-6 C atoms,
where one or more of the substituents R¹ to R⁷ may be partially or fully substituted by halogens, in particular -F and/or -Cl, or partially by -CN or -NO₂
and where, in the substituents R¹ to R⁶, one or two non-adjacent carbon atoms which are not in the α-position may be replaced by atoms and/or atom groups selected from the group -O-, -C(O)-, -C(O)O-, -S-, -S(O)-, -SO₂-, -SO₂O-, -C(O)NH-, -C(O)NR'-, -SO₂NH-, -SO₂NR'-, -N=, -N=N-, -NH-, -NR'-, -PR'-, -P(O)R'-, -P(O)R'-O-, -O-P(O)R'-O-, -P(O)(NR'₂)-NR'-and -PR'₂=N- or by the end groups -C(O)X' or -SO₂X', where R' = non-, partially or perfluorinated C₁- to C₆-alkyl, C₃- to C₇-cycloalkyl, unsubstituted or substituted phenyl or an unsubstituted or substituted heterocycle and X' = F, Cl or Br,
except [NH₄][B(CF₃)₃CN],
or the organic cation is a heterocyclic cation which is selected from the group 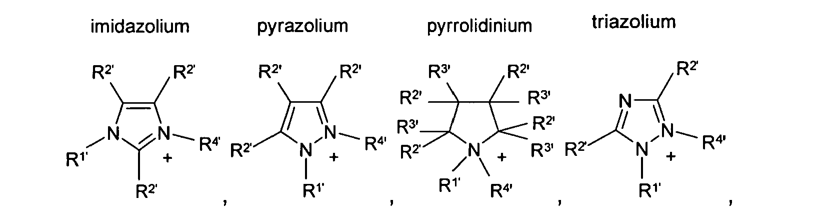 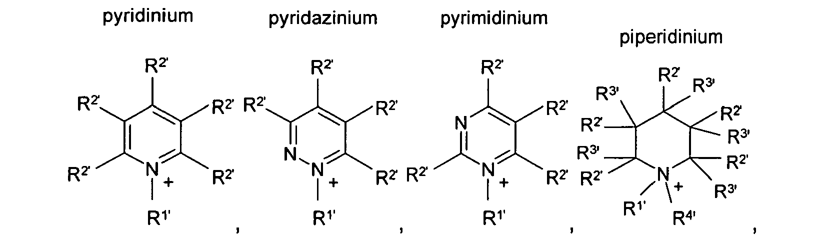 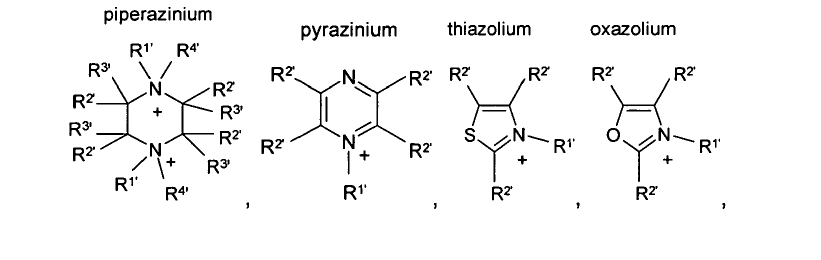 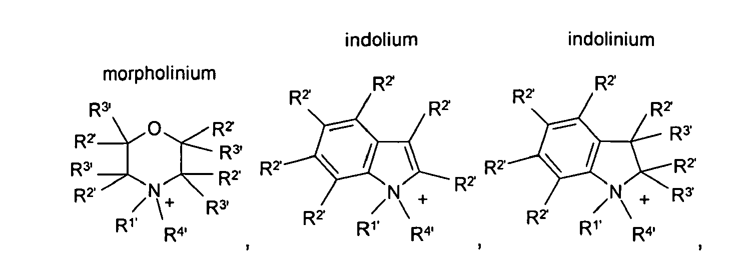 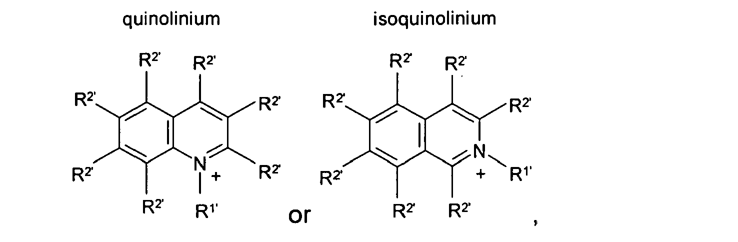 where the substituents
R¹' to R⁴' each, independently of one another, denote hydrogen,
straight-chain or branched alkyl having 1-20 C atoms,
straight-chain or branched alkenyl having 2-20 C atoms and one or more double bonds,
straight-chain or branched alkynyl having 2-20 C atoms and one or more triple bonds,
saturated, partially or fully unsaturated cycloalkyl having 3-7 C atoms, which may be substituted by alkyl groups having 1-6 C atoms, saturated, partially or fully unsaturated heteroaryl, heteroaryl-C₁-C₆-alkyl or aryl-C₁-C₆-alkyl,
where one or more substituents R¹' to R⁴' may be partially or fully substituted by halogens, in particular -F and/or -Cl, or partially by -CN or -NO₂, where R¹' and R⁴' cannot simultaneously be perfluorinated or perchlorinated
and where, in the substituents R¹' to R⁴', one or two non-adjacent carbon atoms which are not in the α-position to the heteroatom may be replaced by atoms and/or atom groups selected from the group -O-, -C(O)-, -C(O)O-, -S-, -S(O)-, -SO₂-, -SO₂O-, -C(O)NH-, -C(O)NR'-, -SO₂NH-, -SO₂NR'-, -N=, -N=N-, -NH-, -NR'-, -PR'-, -P(O)R'-, -P(O)R'-O-, -0-P(O)R'-O-, -P(O)(NR'₂)-NR'- and -PR'₂=N- or by the end groups -C(O)X' or -SO₂X', where R' = non-, partially or perfluorinated C₁- to C₆-alkyl, C₃-to C₇-cycloalkyl, unsubstituted or substituted phenyl or an unsubstituted or substituted heterocycle and X' = F, Cl or Br.

2. Process for the preparation of a salt of the formula (II) according to Claim 1 in a salt-exchange reaction, **characterised in that** an alkali-metal salt of the formula (II) according to Claim 1 is reacted with a compound of the formula (III)
MA (III),
where
M is an organic cation according to Claim 1 and
A denotes OH⁻, F⁻, Cl⁻, Br⁻, I⁻, [HF₂]⁻, [CN]⁻, [SCN]⁻, [CH₃COO]⁻, [CH₃SO₃]⁻, [CF₃COO]⁻, [CF₃SO₃]⁻, [CH₃OSO₃]⁻, [BF₄]⁻, [SO₄]²⁻, [NO₃]⁻, [C₂H₅OSO₃]⁻, [(C₂F₅)₂P(O)O]⁻, [C₂F₅P(O)O₂]²⁻, tosylates, malo- nates, substituted malonates or [CO₃]²⁻.

3. Use of a salt according to Claim 1 as catalyst, phase-transfer catalyst, solvent, ionic liquid or as conductive salt in the electrolytes of electrochemical devices.

## Revendications

1. Sels de formule générale (II)
[B(R^{F})_{4-x-y}(CN)ₓF_{y}]ₐ⁻ M^{a+} (II)
dans laquelle
x=1, 2 ou 3,
y = 0 ou 1,
x + y ≤ 1, 2 ou 3,
a = 1 ou 2,
et dans laquelle
les ligands R^{F} peuvent être identiques ou différents et R^{F} représente un groupement C₁₋₁₂-alkyle perfluoré ou partiellement fluoré et où le groupement CN est lié à l'atome B via l'atome C et
M^{a+} est un cation organique qui est choisi dans le groupe constitué par [NR¹R²R³R⁴]⁺, [PR¹R²R³R⁴]⁺, [P(NR¹R²)₂(NR³R⁴)₂]⁺, [C(NR¹R²)(NR³R⁴)(NR⁵R⁶)]⁺, [(R¹R²N)-C(=OR⁷)(NR³R⁴)]⁺ ou [(R¹R²N)-C(=SR⁷)(NR³R⁴)]⁺, où
R¹ à R⁷ désignent chacun, indépendamment l'un de l'autre, hydrogène,
alkyle à chaîne linéaire ou ramifiée ayant de 1 à 20 atomes de C, alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé, ayant 3-7 atomes de C, qui peut être substitué par des groupements alkyle ayant 1-6 atomes de C,
où un ou plusieurs parmi les substituants R¹ à R⁷ peuvent être partiellement ou totalement substitués par des halogènes, en particulier -F et/ou -Cl, ou partiellement par -CN ou -NO₂
et où, dans les substituants R¹ à R⁶, un ou deux atomes de carbone non adjacents qui ne sont pas en position α peuvent être remplacés par des atomes et/ou des groupes d'atomes choisis dans le groupe constitué par -O-, -C(O)-, -C(O)O-, -S-, -S(O)-, -SO₂-, -SO₂O-, -C(O)NH-, -C(O)NR'-, -SO₂NH-, -SO₂NR'-, -N=, -N=N-, -NH-, -NR'-, -PR'-, -P(O)R'-, -P(O)R'-O-, -O-P(O)R'-O-, -P(O)(NR'₂)-NR'- et -PR'₂=N- ou par les groupements terminaux -C(O)X' ou -SO₂X', où R' = C₁- à C₆-alkyle, C₃-à C₇-cycloalkyle, non ou partiellement fluoré, ou perfluoré, phényle non substitué ou substitué ou un hétérocycle non substitué ou substitué et X' = F, Cl ou Br,
sauf [NH₄][B(CF₃)₃CN],
ou le cation organique est un cation hétérocyclique qui est choisi dans le groupe constitué par 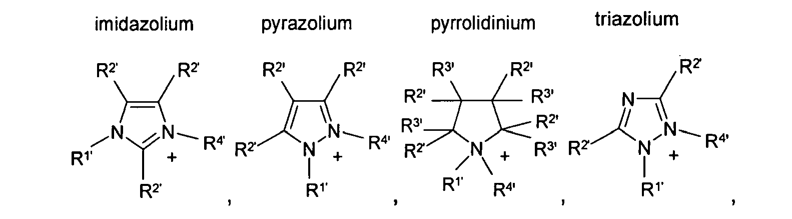 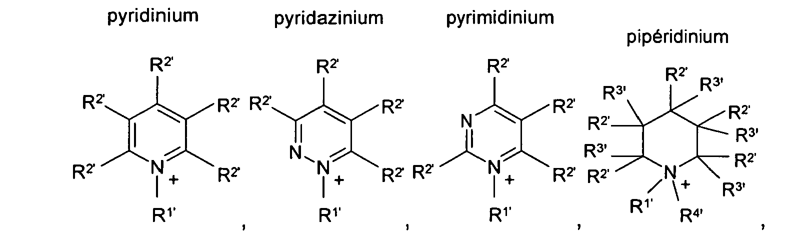 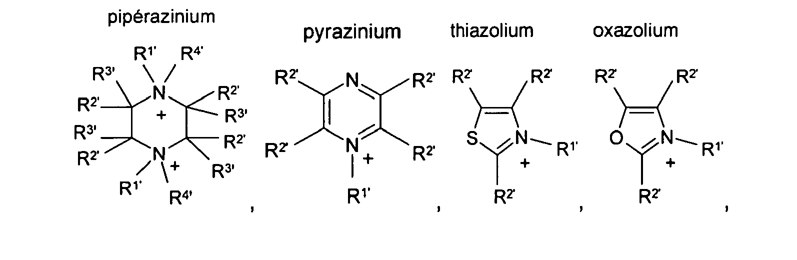 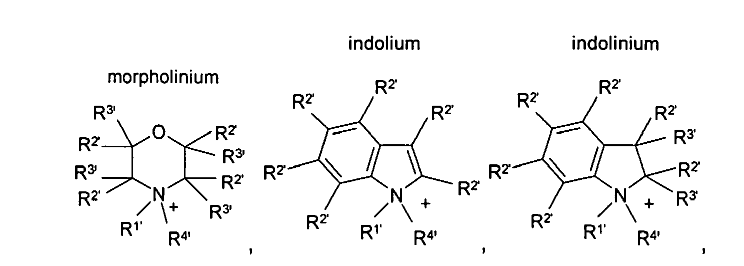 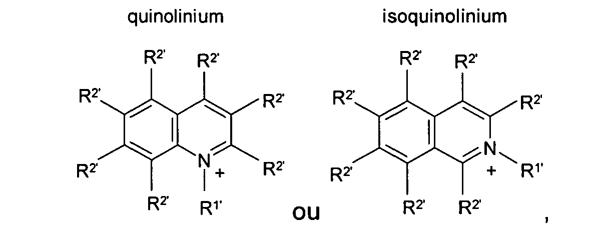 où les substituants
R¹' à R⁴' désignent chacun, indépendamment l'un de l'autre, hydrogène,
alkyle à chaîne linéaire ou ramifiée ayant de 1-20 atomes de C, alcényle à chaîne linéaire ou ramifiée ayant 2-20 atomes de C et une ou plusieurs doubles liaisons,
alcynyle à chaîne linéaire ou ramifiée ayant 2-20 atomes de C et une ou plusieurs triples liaisons,
cycloalkyle saturé, partiellement ou totalement insaturé, ayant 3-7 atomes de C, qui peut être substitué par des groupements alkyle ayant 1-6 atomes de C,
hétéroaryle saturé, partiellement ou totalement insaturé, hétéroaryl-C₁-C₆-alkyle ou aryl-C₁-C₆-alkyle,
où un ou plusieurs substituants R¹' à R⁴' peuvent être partiellement ou totalement substitués par des halogènes, en particulier -F et/ou -Cl, ou partiellement par -CN ou -NO₂, où R¹' et R⁴' ne peuvent être simultanément perfluorés ou perchlorés
et où, dans les substituants R¹' à R⁴', un ou deux atomes de carbone non adjacents qui ne sont pas en position α par rapport à l'hétéroatome peuvent être remplacés par des atomes et/ou des groupes d'atomes choisis dans le groupe constitué par -O-, -C(O)-, -C(O)O-, -S-, -S(O)-, -SO₂-, -SO₂O-, -C(O)NH-, -C(O)NR'-, -SO₂NH-, -SO₂NR'-, -N=, -N=N-, -NH-, -NR'-, -PR'-, -P(O)R'-, -P(O)R'-O-, -O-P(O)R'-O-, -P(O)(NR'₂)-NR'-et -PR'₂=N- ou par les groupements terminaux -C(O)X' ou -SO₂X', où R' = C₁- à C₆-alkyle, C₃- à C₇-cycloalkyle, non ou partiellement fluoré, ou perfluoré, phényle non substitué ou substitué ou un hétérocycle non substitué ou substitué et X' = F, Cl ou Br.

2. Procédé de préparation d'un sel de formule (II) selon la revendication 1 dans une réaction d'échange de sels, **caractérisé en ce qu'**un sel de métal alcalin de formule (II) selon la revendication 1 est réagi avec un composé de formule (III)
MA (III),
où
M est un cation organique selon la revendication 1 et
A désigne OH⁻, F⁻, Cl⁻, Br⁻, I⁻, [HF₂]⁻, [CN]⁻, [SCN]⁻, [CH₃COO]⁻, [CH₃SO₃]⁻, [CF₃COO]⁻, [CF₃SO₃]⁻, [CH₃OSO₃]⁻, [BF₄]⁻, [SO₄]²⁻, [NO₃]⁻, [C₂H₅OSO₃]⁻, [(C₂F₂)P(O)O]⁻, [C₂F₅P(O)O₂]²⁻, des tosylates, des malonates, des malonates substitués ou [CO₃]²⁻.

3. Utilisation d'un sel selon la revendication 1 comme catalyseur, catalyseur de transfert de phase, solvant, liquide ionique ou comme sel conducteur dans les électrolytes de dispositifs électrochimiques.
